# EUROPÄISCHE PATENTSCHRIFT

(11) **EP 0 820 374 B1**
(45) Veröffentlichungstag und Bekanntmachung des Hinweises auf die Patenterteilung: **18.09.2002**
(21) Anmeldenummer: 97900928.9
(22) Anmeldetag: 05.02.1997
(51) Int. Cl.: B29C 45/27

(54) **HEISSKANAL-SPRITZWERKZEUG**
HOT CHANNEL INJECTION MOULDING DIE
MOULE A INJECTION A CANAUX CHAUFFANTS

(30) Priorität: 07.02.1996 CH 32196; 14.10.1996 CH 250496
(43) Veröffentlichungstag der Anmeldung: 28.01.1998
(60) Teilanmeldung: 99202899.3
(73) Patentinhaber: SCHÖTTLI AG, 8253 Diessenhofen (CH)
(72) Erfinder: MANZ, Willi, CH-8460 Marthalen (CH)
(74) Vertreter: Gachnang, Hans Rudolf
(86) Internationale Anmeldenummer: CH9700036
(87) Internationale Veröffentlichungsnummer: WO97028945

(56) Entgegenhaltungen:
- FR-A- 1 188 316
- GB-A- 243 514
- GB-A- 1 535 164
- GB-A- 2 109 296
- US-A- 2 354 363
- US-A- 3 790 324
- PATENT ABSTRACTS OF JAPAN vol. 018, no. 666 (M-1724), 15.Dezember 1994 & JP 06 262650 A (SADAO SHIMIZU), 20.September 1994,
- PATENT ABSTRACTS OF JAPAN vol. 009, no. 333 (M-443), 27.Dezember 1985 & JP 60 165462 A (HITACHI DENSEN KK), 28.August 1985,

## Beschreibung

Die vorliegende Erfindung betrifft ein Heisskanal-Spritzwerkzeug gemäss Oberbegriff des Patentansprüchs 1.

Aus der US-A 2,354,363 ist eine horizontal liegende Einspritzdüse bekannt. Mit einer Heizpatrone, die sich am hinteren Ende unterhalb der Einspritzdüse in einem Wasserbad befindet, wird Wasserdampf erzeugt, der sich dann in einem Hohlraum um den Düsenkörper herum verteilt und an den Wänden kondensiert. Durch zusätzliche Kanäle kann Dampf auch in einen torpedoförmigen Körper innerhalb des Düsenkanals geleitet werden, um den flüssigen Kunststoff zusätzlich zu erwärmen. Diese bekannte Einspritzdüse ermöglicht das Warmhalten des flüssigen Kunststoffs innerhalb seines Weges vom Eintritt in den Düsenkörper bis zum Austritt in die Spritzform. Eine exakte Wärmeverteilung innerhalb und insbesondere entlang des Düsenkörpers ist durch die dampfbeheizte Düse nicht möglich.

Aufgabe der vorliegenden Erfindung ist die Schaffung einer Heisskanaldüse mit einer Heizung, die eine im wesentlichen konstante Wärmeverteilung oder einen gleichmässigen Temperaturverlauf über den gesamten Düsenkörper erzeugt.

Gelöst wird diese Aufgabe durch ein Heisskanal-Spritzwerkzeug mit einer Heisskanaldüse mit den Merkmalen des Patentanspruches 1. Vorteilhafte Ausgestaltungen der Erfindung sind in den abhängigen Ansprüchen definiert.

Die gute Leitfähigkeit der im Zwischenraum zwischen dem Düsenkörper und einer diese umgebenden Hülle befindlichen Flüssigkeit ermöglicht eine optimale, gleichmässige Verteilung der vom Heizelement unterhalb der Düse zugeführten Wärme. Durch Konvektion kann die örtlich vom Heizelement stärker erwärmte Flüssigkeit um den Düsenkörper herum und insbesondere in die Kontaktbereiche mit dem Aüsenkörper geleitet werden.

Eine besonders optimale Verteilung der zugeführten Wärmemenge entlang der Düse kann durch Leitmittel bewirkt werden. Diese verlaufen in einem bevorzugten Ausführungsbeispiel aus dem mittleren Bereich der Düse gegen deren beide Enden und lenken den Flüssigkeitsstrom in die Wärmeabflusszonen. Das Heizelement kann von aussen auf die Hülle aufgesetzt und folglich bei Defekt mühelos ersetzt werden.

Die im wesentlichen über die gesamte Düsenlänge in einem engen Temperaturbereich konstante Temperatur ermöglicht die Verarbeitung temperaturempfindlicher Kunststoffe. Damit können die beim Kaltkanalverfahren anfallenden Angussverluste vollständig vermieden werden.

Anhand illustrierter Ausführungsbeispiele wird die Erfindung näher erläutert. Es zeigen:
- Figur 1: einen Teilquerschnitt durch ein Kunststoff-Spritzwerkzeug,
- Figur 2: ein Diagramm des Temperaturverlaufes entlang der Düse,
- Figur 3: eine perspektivische Darstellung des Düsenkörpers mit eingelegten Leitmitteln und angedeuteter Hülle.

Mit Bezugszeichen 1 ist die Gesamtheit einer Heisskanaldüse bezeichnet, welche einen rohrförmigen Düsenkörper 3 mit einer zentralen Bohrung aufweist, die den Einspritzkanal 5 bildet und eingangsseitig im Bereich A mit einer Bohrung 7 in der Heisskanalplatte 2 fluchtet. Im Bereich B endet die Bohrung 5, dort allerdings verjüngt, vor der in strichpunktierten Linien angedeuteten Kavität 9. Die Kavität 9 befindet sich in der sogenannten Bodenplatte 11, auch Einsatzplatte genannt. Der Düsenkörper 3 wird über annähernd seine gesamte Länge von einer Hülle 13 unter Bildung eines Hohlraumes 15 umgeben. Innerhalb dieses Hohlraumes 15 sind zwei Leitmittel 17 und 19 enthalten, die den Düsenkörper 3 umschlingen. Die Peripherien der beiden Leitmittel 17 und 19 liegen vorzugsweise an der Innenseite der Hülle 13 an. Der gesamte Hohlraum 15 ist mit einer Flüssigkeit, z.B. mit öl, ausgefüllt. Letzteres ist durch eine Bohrung 21 eingefüllt worden. Alternativ zu Öl könnte eine andere wärmeleitende Flüssigkeit oder ein Gas eingefüllt werden.

Unterhalb der Hülle 13 ist ein Heizelement 23 angeordnet. Das Heizelement 23 liegt satt an der Oberfläche der Hülle 13 an.

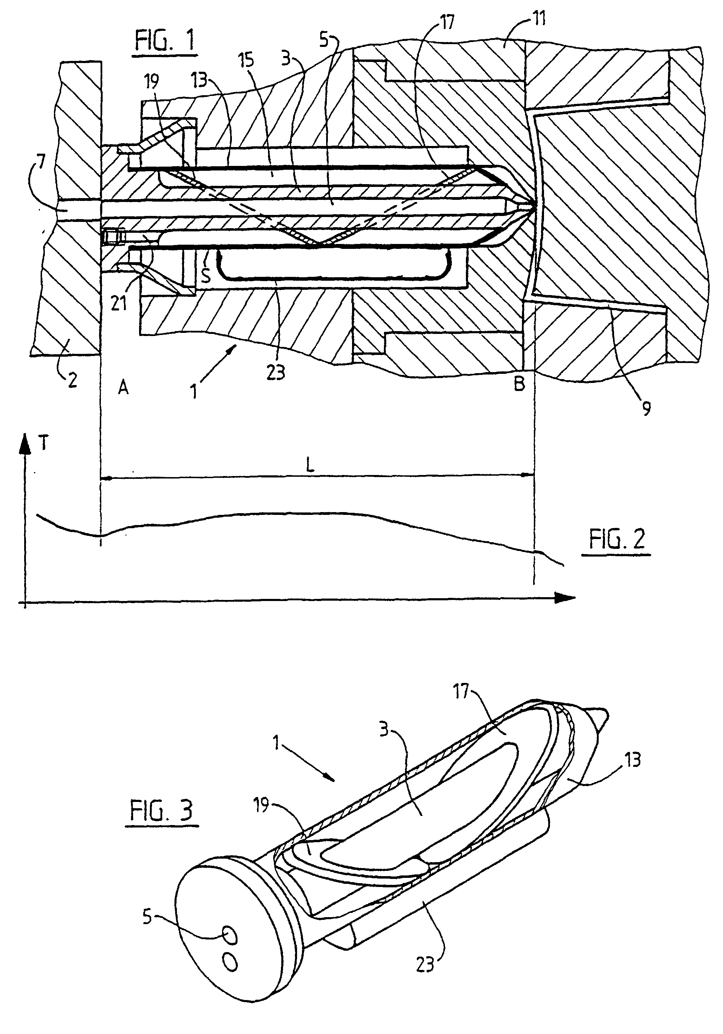

Aus der Darstellung in Figur 3 ist die Lage der beiden Leitmittel 17 und 19 innerhalb der angedeuteten Hülle 13 perspektivisch ersichtlich.

Figur 2 zeigt den Verlauf der Temperatur T über die gesamte Länge L des Düsenkörpers 3 und an beiden Enden noch Teilbereiche in der Hotrunnerplatte 2 und in der Bodenplatte 11.

Alternativ zu der in den Figuren zylindrisch dargestellten Hülle 13 könnte auch eine konisch geformte eingesetzt werden, um den Wärmetransport entsprechend zu unterstützen.

Alternativ zu den elliptisch gestalteten Leitmitteln 17 und 19 könnten an der Hülle 12 Sicken angebracht werden, welche in den Hohlraum 15 hineinragen und die Aufgabe der Leitmittel 17 und 19 übernehmen. Diese Ausführungsformen sind in den Figuren nicht dargestellt.

Im folgenden wird vorerst die Funktionsweise der Beheizung der Heisskanaldüse 1 erläutert. Vom Heizelement 23 gelangt die darin erzeugte Wärme von unten über den Mantel der Hülle 13 an das Öl im Raum 15. Dieses erwärmt sich und steigt von der tiefsten Stelle im Bereich des Scheitels S beidseitig nach oben. Der Aufstieg erfolgt aber nicht in der Vertikalen, sondern die beiden Leitbleche 17 und 19 bewirken, dass das erwärmte aufsteigende Öl zu den Enden des Düsenkörpers hin umgelenkt wird. In diesen Bereichen A, B wird der Düsenkörper 3 infolge Wärmezu- bzw. Wärmeabflusses in die benachbarten Bereiche stark erwärmt bzw. abgekühlt. Das dort ankommende Öl gleicht die Temperaturdifferenzen aus und wird umgelenkt, um dann im Bereich des unteren Scheitels S über der Wärmequelle, nämlich dem Heizelement 23, erneut aufgewärmt zu werden. Es kann seine Reise durch den Raum 15 erneut beginnen. Das Öl, welches sich zwischen den beiden Leitblechen 17 und 19 befindet, wird auch dort noch stark genug erwärmt, um nach oben zu steigen, und bewirkt eine im wesentlichen gleichmässige Verteilung der Wärme entlang der obenliegenden Mantelfläche des Düsenkörpers 3. Versuche haben gezeigt, dass sich bei einer gemäss Figur 1 ausgerüsteten Heisskanaldüse 1 ein annähernd konstanter, innerhalb weniger Grad Celsius befindlicher Temperaturverlauf gemäss Figur 2 ergibt. Aus dieser Kurve ist ersichtlich, dass im Bereich A die Temperatur am höchsten ist, weil nämlich der Heisskanalverteiler 2 ebenfalls beheizt ist, um das Kunststoff-Material in der Bohrung 7 flüssig zu halten. Bis annähernd an das bodenplattenseitige Ende der Düse 3 verbleibt die Temperatur T fast konstant und bewegt sich auch in einem Band von wenigen Grad Celsius. Erst im Bereich des Überganges zur gekühlten Bodenplatte 11 unterschreitet die Temperatur den Mittelwert. Sie verbleibt aber dennoch innerhalb eines optimalen Verarbeitungsbereiches für das Kunststoffmaterial. Eine Temperaturspitze, die zur Schädigung des Werkstoffes führen kann, wird erfolgreich vermieden.

Das in den Figuren 1 bis 3 beschriebene Ausführungsbeispiel zeigt zwei Leitbleche 17,19. Selbstverständlich könnte bei einer längeren Düse eine modifizierte Leitblechausgestaltung Einsatz finden. Ebenso selbstverständlich wäre eine solche mit einem einzigen Leitblech 17, falls die Düse sehr kurz ist.

## Patentansprüche

1. Heisskanal-Spritzwerkzeug, umfassend eine horizontal liegende Einspritzdüse (1) mit einem Düsenkörper (3), der einen Einspritzkanal (5) enthält, einen den Düsenkörper (3) umgebenden, von einer Hülle (13) umschlossenen Heizmantel und ein elektrisches Heizelement (23), wobei der Heizmantel durch ein Fluidum in einem zwischen dem Düsenkörper (3) und der Hülle (13) liegenden Hohlraum (15) gebildet wird, **dadurch gekennzeichnet, dass** das Heizelement (23) ausserhalb der Hülle (13) und unterhalb derselben liegt und dass der Hohlraum (15) mit einer gut Wärmeleitenden Flüssigkeit gefüllt ist.

2. Heisskanaldüse nach Anspruch 1, **dadurch gekennzeichnet, dass** mindestens im Hohlraum (15) ein Leitmittel (17,19) eingesetzt ist, das den Düsenkörper (13) teilweise oder ganz umschlingt.

3. Heisskanaldüse nach Anspruch 2, **dadurch gekennzeichnet, dass** das Leitmittel (17,19) ein elliptischer Ring ist.

4. Heisskanaldüse nach Anspruch 2, **dadurch gekennzeichnet, dass** das Leitmittel (17,19) durch eine nach innen gerichtete Sicke an der Hülle (13) gebildet wird.

5. Heisskanaldüse nach einem der Ansprüche 1 bis 4, **dadurch gekennzeichnet, dass** die vom Heizelement (23) erwärmte Flüssigkeit im Hohlraum (15) vom Leitmittel (17,19) zu den beiden Enden des Düsenkörpers (13) geleitet wird.

6. Heisskanaldüse nach einem der Ansprüche 1 bis 5, **dadurch gekennzeichnet, dass** das Heizelement (23) im Bereich der unteren Scheitellinie (S) der Hülle (13) angeordnet ist.

## Claims

1. Hot-channel injection moulding tool, including a horizontally extending injection nozzle (1) with a nozzle body (3), which has an injection channel (5), said tool also including a heating jacket, which surrounds the nozzle body (3) and is enclosed by a covering (13), and an electrical heating element (23), the heating jacket being formed by a fluid in a cavity (15) situated between the nozzle body (3) and the covering (13), **characterised in that** the heating element (23) lies externally of the covering (13) and beneath said covering, and **in that** the cavity (15) is filled with a fluid of good thermal conductivity.

2. Hot-channel nozzle according to claim 1, **characterised in that** at least in the cavity (15) there is inserted one conducting means (17, 19) which partially or wholly wraps around the nozzle body (13).

3. Hot-channel nozzle according to claim 2, **characterised in that** the conducting means (17, 19) is an elliptical ring.

4. Hot-channel nozzle according to claim 2, **characterised in that** the heating means (17, 19) is formed by an inwardly orientated bead on the covering (13).

5. Hot-channel nozzle according to one of claims 1 to 4, **characterised in that** the liquid in the cavity (15), which liquid has been heated by the heating element (23), is conducted by the conducting means (17, 19) to the two ends of the nozzle body (13).

6. Hot-channel nozzle according to one of claims 1 to 5, **characterised in that** the heating element (23) is disposed in the region of the lower junction line (S) of the covering (13).

## Revendications

1. Moule à injection à canal chauffant comprenant une buse d'injection (1) s'étendant horizontalement dotée d'un corps de buse (3) renfermant lui-même un canal d'injection (5), comprenant également une enveloppe chauffante entourant le corps de buse (3) et elle-même entourée d'une gaine (13), ainsi qu'un élément chauffant électrique (23), sachant que l'enveloppe chauffante est constituée par un fluide remplissant un espace libre (15) entre le corps de buse (3) et la gaine (13), **caractérisé en ce que** l'élément chauffant (23) est situé en dehors de la gaine (13) et au-dessous de celle-ci, et **en ce que** l'espace libre (15) est rempli d'un liquide conduisant bien la chaleur.

2. Buse de canal chauffant selon la revendication 1, **caractérisée en ce qu'**au moins un élément de guidage (17, 19) entourant partiellement ou totalement le corps de buse (13) est logé dans l'espace libre (15).

3. Buse de canal chauffant selon la revendication 2, **caractérisée en ce que** l'élément de guidage (17, 19) est un anneau elliptique.

4. Buse de canal chauffant selon la revendication 2, **caractérisée en ce que** l'élément de guidage (17, 19) est constitué par une moulure de la gaine (13) qui est dirigée vers l'intérieur.

5. Buse de canal chauffant selon l'une des revendications 1 à 4, **caractérisée en ce que** le liquide contenu dans l'espace libre (15) et chauffé par l'élément chauffant (23) est amené par l'élément de guidage (17, 19) aux deux extrémités du corps de buse (3).

6. Buse de canal chauffant selon l'une des revendications 1 à 5, **caractérisée en ce que** l'élément chauffant (23) est placé dans la zone de la ligne de sommet (S) de la gaine (13).
